# EUROPÄISCHE PATENTANMELDUNG

(11) **EP 1 298 839 A1**
(43) Veröffentlichungstag der Anmeldung: **02.04.2003**
(21) Anmeldenummer: 01123448.1
(22) Anmeldetag: 28.09.2001
(51) Int. Cl.: H04L 12/24, H04L 12/26

(54) **Netzwerk Performance Management**

(71) Anmelder: SIEMENS AKTIENGESELLSCHAFT, 80333 München (DE)
(72) Erfinder: Schwagmann, Josef, 85221 Dachau (DE)

(57) **Zusammenfassung**

Bei einem Verfahren zum Management der Performance eines Kommunikationsnetzwerkes, bestehend aus einer Vielzahl von Netzelementen, wobei in vorbestimmten Netzelementen Performancemessungen von Performance-Indikatoren durchgeführt werden, ist die Topologie des Kommunikationsnetzwerkes in einer Topologie-Datenbank abgelegt, die die Netzelemente, deren Verbindungen und deren Eigenschaften enthält, wobei die Nutzungshäufigkeit einzelner Wegstrecken und/oder einzelner Netzwerkelemente des Netzwerkes mittels der Topologie-Datenbank berechnet wird.

## Beschreibung

Die Erfindung betrifft ein Verfahren zum Performance-Management von Kommunikationsnetzwerken, insbesondere Telekommunikationsnetzwerken, die eine große Anzahl von Netzwerkelementen enthalten, gemäß dem Oberbegriff des Patentanspruchs 1.

Das Management von Telekommunikationsnetzwerken beinhaltet eine große Anzahl von Netzwerksbetriebsprozeßen, die sich grob in drei Klassen unterteilt lassen, nämlich Aufbau des Netzwerkes, Betrieb des Netzwerkes und Entwicklung des Netzwerkes. Ein Beispiel eines Netzwerk-Managements ist in WO99/20034 beschrieben.

Der Bereich des Betriebs und Unterhalt des Netzwerks betrifft die täglichen Arbeitsroutinen zum Betreiben und Unterhalten des Netzwerkes. Darunter fallen die Fehlerbehandlung innerhalb des Netzwerkes in Echtzeit, das Abarbeiten von Alarmmeldungen, Lokalisieren und Analysieren der Fehler und das Durchführen von Reparaturen.

Ein typisches Telekommunikationsnetzwerk besteht aus einer großen Anzahl von Netzwerkelementen NE, einschließlich Schaltknoten, Basisstationen, Übertragungsknoten, etc.. Beispielsweise besteht ein großes Netzwerk aus zehntausenden Netzwerkelementen, wobei jedes Netzwerkelement aus einer Vielzahl von Einheiten bestehen kann. Aufgrund dieser komplexen Natur eines derartigen Netzwerks kommt es täglich zu einer großen Anzahl von Fehlermeldungen, wobei jeder Fehler sich in einem oder mehreren Alarmmeldungen manifestieren kann. Es ist jedoch auch möglich, daß ein Fehler sich überhaupt nicht in einem Alarm äußert.

Um das Netzwerk zu Betreiben und zu Beobachten, ist mindestens ein Netzwerk-Management bzw. Netzwerk-Managementsystem im Netzwerk angeordnet, in dem Alarmmeldungen und andere Netzwerkinformationen gesammelt und ausgewertet werden, um das Netzwerk zu steuern und Wartungen durchzuführen.

Ferner weist das Netzwerk-Managementsystem üblicherweise ein Performance-Management auf, in dem Performance-Messungen zusammengeführt werden, anhand derer die Leistungsfähigkeit oder Performance des Netzwerkes und seiner Abschnitte ermittelt werden, um den Betrieb des Netzwerks zu optimieren, die Servicequalität zu verbessern und das Netzwerk so auszulasten, daß die Kosten minimiert werden.

Diese Performance-Messungen werden in vorbestimmten Netzwerkelementen oder Netzwerkknoten vorgenommen und umfassen beispielsweise die Ermittlung der Häufigkeit von Anrufversuchen, blockierten oder abgebrochenen Anrufe, fehlgeschlagenen Handover-Prozesse, Zellenverlusten bei ATM-Netzen (ATM: Asynchronous Transmission Mode), Bit-Fehlerraten, und Packetverlusten bei IP-Netzen. Die in den Netzwerkelementen erzeugten Performance-Daten werden in den Netzwerkelementen üblicherweise zwischengespeichert und in vorbestimmten zeitlichen Intervallen von dem Performance-Management abgerufen. Dort werden diese Daten in eine Performance-Datenbank abgelegt und ausgewertet. Diese Zeitintervalle, in denen die Daten abgerufen bzw. übertragen werden, betragen üblicherweise 5 bis 15 Minuten.

Bei diesen Messungen entstehen in den Netzelementen große Mengen an Performancedaten. Alle diese Daten werden gesammelt, in entsprechenden Speichermedien gespeichert und dem Performance-Management zur Auswertung übermittelt. Nachdem dann im Performance-Management festgestellt wurde, daß die Daten im zulässigen Bereich liegen, werden die Daten zu Werten über größere Zeiträume aggregiert, beispielsweise können für eine offline Auswertung die Daten für eine vorgegebene Zeit, beispielsweise 24 h, gesammelt und ausgewertet werden. Die Rohdaten werden anschließend vernichtet.

Durch die Aggregierung der Daten können zwar Trends und Probleme in einem Kommunikationsnetzwerk erkannt werden, allerdings ist eine aktuelle Beurteilung der Performance des Netzwerks nicht möglich. Insbesondere erfolgt bisher die Betrachtung der Performance des Netzwerks aus Sicht des einzelnen Netzwerkelements, so daß eine aktuelle Beurteilung der Performance einzelner Wegstrecken, insbesondere kritischer Wegstrecken, des Netzwerks erst im nachhinein durchgeführt werden kann.

Der Erfindung liegt daher die Aufgabe zugrunde, ein Verfahren zur Ermittlung der Performance insbesondere kritischer Wegstrecken eines Netzwerkes zu schaffen, das zeitlich näher an dem aktuellen Verhalten des Netzwerks liegt.

Diese Aufgabe wird durch ein Verfahren nach Anspruch 1 gelöst. Bevorzugte Ausführungsformen der Erfindung sind Gegenstand der Unteransprüche.

Bei dem erfindungsgemäßen Verfahren zum Management der Performance eines Kommunikationsnetzwerkes, bestehend aus einer Vielzahl von Netzelementen, wobei in vorbestimmten Netzelementen Performancemessungen von Performance-Indikatoren durchgeführt werden, wird die Topologie des Kommunikationsnetzwerkes in einer Topologie-Datenbank abgelegt, die die Netzelemente, deren Verbindungen sowie deren Eigenschaften enthält, wobei die Nutzungshäufigkeit einzelner Wegstrecken und/oder einzelner Netzwerkelemente des Netzwerkes mittels der Topologie-Datenbank berechnet wird. Vorzugsweise beinhaltet die Topologie-Datenbank die End-to-End-Verbindungen des Netzes. Die Nutzungshäufigkeit einer Wegstrecke bedeutet hier statisch gesehen, wieviel logische Verbindungen über diesen Weg geschaltet werden und nicht, ob tatsächlich Verkehr über die Wegstrecke läuft.

Vorzugsweise wird aus den Ergebnissen dieser Berechnung eine Liste kritischer Wegstrecken und/oder Netzelemente erstellt. Insbesondere wird die Liste der kritischer Wegstrecken und/oder Netzelemente bei jeder Änderung der Topologie-Datenbank berechnet.

Aus dieser Liste der kritischen Wegstrecken und/oder Netzelemente wird vorzugsweise die Reihenfolge und/oder die Häufigkeit der Durchführung von Performancemessungen in den Netzelementen abgeleitet.

Vorzugsweise wird immer dann eine Neuberechnung der Nutzungshäufigkeit einzelner Wegstrecken und/oder Netzelemente mittels der Topologie-Datenbank durchgeführt, wenn sich die Topologie des Netzes und damit auch die Topologie-Datenbank geändert hat, beispielsweise bei einer Erweiterung des Netzes um weitere Netzelemente und/oder Wegstrecken.

Das Ergebnis der Berechnung bzw. die kritische Liste wird über eine Workorder an den zuständigen Operator geleitet, der dann die entsprechende Erfassung der Performance-Daten in der richtigen Reihenfolge und Häufigkeit veranlaßt. Hierdurch ist eine Konzentration auf die effektivsten Messungen möglich und es ist sicher, daß die Qualität des Netzes an den Stellen mit der höchsten Wirkbreite sichergestellt werden kann. Ferner können durch die Berechnung der Nutzungshäufigkeit von Wegstrecken und Netzelementen potentielle Engpässe ermittelt werden, auf die dann mit geeigneten Maßnahmen eingewirkt werden kann.

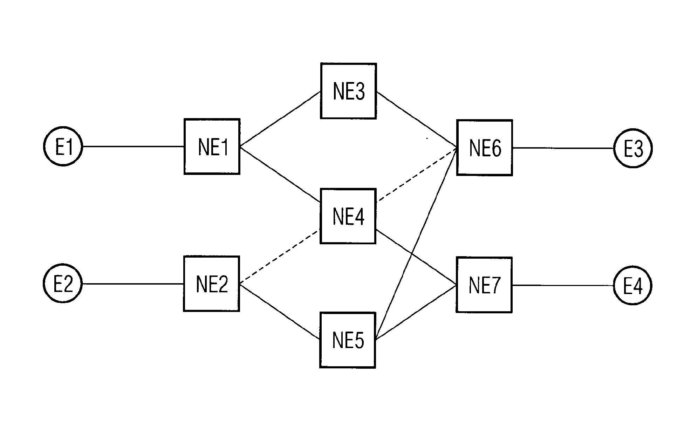

Im folgenden wird eine bevorzugte Ausführungsform der Erfindung anhand der einzigen Figur, die ein einfaches Kommunikationsnetzwerk zwischen mehreren Endpunkten zeigt, näher erläutert.

In der Figur sind vier Endpunkte E1, E2, E3, E4 eines Kommunikationsnetzwerkes bestehend aus den Netzelemente NE1, NE2, NE3, NE4, NE5, NE6 und NE7 dargestellt. Zwischen den Netzelementen NE1 bis NE7 und den Endpunkten E1 bis E4 sind verschiedene Verbindungen geschaltet, die symbolisch durch durchgezogene Linien dargestellt sind. Es können über die eingezeichneten Verbindungen jeder Endpunkt E1 bis E4 mit jedem anderen Endpunkt E1 bis E4 verbunden werden. Beispielsweise ist eine Verbindung zwischen E1 und E3 hier nur über den Weg NE1-NE3-NE6 möglich, während eine Verbindung zwischen E1 und E2 über NE1-NE3-NE6-NE5-NE2 und NE1-NE4-NE7-NE5-NE2 möglich ist. Ferner ist eine Verbindung NE2-NE4-NE6 gestrichelt eingezeichnet, was bedeuten soll, daß diese Verbindung derzeit nicht operabel oder nicht vorhanden ist, d.h. die Verbindung kann nicht hergestellt werden.

Die dieser Netztopologie entsprechende Topologie-Datenbank enthält alle Netzknoten NE1 bis NE7, sowie die zwischen den Netzknoten möglichen Verbindungen und die Eigenschaften der Netzknoten (Netzelemente). Mittels dieser Topologie-Datenbank kann die Nutzungshäufigkeit einzelner Wegstrecken im Sinne einer statischen Aussage darüber, wieviele logische Verbindungen über diesen Weg geschaltet sind, berechnet und ein Liste kritischer Wegstrecken im Netz ermittelt werden. Würde in diesem Beispiel daher die Berechnung ergeben, daß die End-to-End-Verbindung E1-NE1-NE4-NE7-E4 aufgrund der Nutzungshäufigkeit ein Engpaß darstellt, so würden Performance-Messungen in den Netzknoten NE1, NE4 und NE7 initiiert werden.

Falls ferner die Netzverbindungen NE2-NE4 und/oder NE4-NE6 in Betrieb genommen werden, so erfolgt eine Änderung der Topologie-Datenbank durch entsprechende Einträge. Um die Nutzungshäufigkeit der Wegstrecken des nunmehr veränderten Netzes und so die Liste der kritischen Wegstrecken neu zu bestimmen, wird eine erneue Berechnung der Nutzungshäufigkeit mittels der Topologie-Datenbank durchgeführt. So können neue Engpässe ermittelt und entsprechende Maßnahmen ergriffen werden, um die Servicequalität des Netzes an den Stellen sicherzustellen, die die größte Wirkbreite haben.

## Patentansprüche

1. Verfahren zum Management der Performance eines Kommunikationsnetzwerkes, bestehend aus einer Vielzahl von Netzelementen, wobei in vorbestimmten Netzelementen Performancemessungen von Performance-Indikatoren durchgeführt werden, **dadurch gekennzeichnet, daß** die Topologie des Kommunikationsnetzwerkes in einer Topologie-Datenbank abgelegt ist, die die Netzelemente, deren Verbindungen und deren Eigenschaften enthält, wobei die Nutzungshäufigkeit einzelner Wegstrecken und/oder einzelner Netzwerkelemente des Netzwerkes mittels der Topologie-Datenbank berechnet wird.

2. Verfahren nach Anspruch 2, **dadurch gekennzeichnet, daß** die Topologie-Datenbank die End-to-End-Verbindungen des Kommunikationsnetzwerkes aufweist.

3. Verfahren nach einem der Ansprüche 1 oder 2, **dadurch gekennzeichnet, daß** eine Liste kritischer Wegstrecken und/oder Netzelemente erstellt wird.

4. Verfahren nach Anspruch 3, **dadurch gekennzeichnet, daß** in den Netzelementen der kritischen Wegstrecken und/oder den kritischen Netzelementen Performance-Messungen durchgeführt werden.

5. Verfahren nach einem der vorangegangenen Ansprüche, **dadurch gekennzeichnet, daß** die Nutzungshäufigkeit einzelner Wegstrecken und/oder Netzelemente bei jeder Änderung der Netztopologie und damit Änderung der Topologie-Datenbank neu berechnet wird.

6. Verfahren nach einem der Ansprüche 3 bis 5, **dadurch gekennzeichnet, daß** die Reihenfolge und Häufigkeit der Durchführung von Performancemessungen in den Netzelementen aus der Liste der kritischen Wegstrecken und/oder Netzelemente abgeleitet wird.
